# EUROPEAN PATENT SPECIFICATION

(11) **EP 0 372 899 B1**
(45) Date of publication and mention of the grant of the patent: **10.05.1995**
(21) Application number: 89312652.4
(22) Date of filing: 05.12.1989
(51) Int. Cl.: G05B 11/32

(54) **Apparatus and method for the simultaneous control of two or more related variables**
Verfahren und Vorrichtung zum gleichzeitigen Steuern von zwei oder mehreren abhängigen Variablen
Procédé et dispositif de commande simultanée de deux ou plusieurs variables dépendantes

(30) Priority: 08.12.1988 GB 8828713
(43) Date of publication of application: 13.06.1990
(73) Proprietor: TRINOVA LIMITED, Havant, Hampshire PO9 2NB (GB)
(72) Inventor: Cleasby, Kenneth George, Chichester Sussex PO19 4ED (GB)
(74) Representative: Singleton, Jeffrey

(56) References cited:
- US-A- 4 325 896
- PATENT ABSTRACTS OF JAPAN vol. 9, no. 256 (M-421)(1979) 15 October 1985,& JP-A-60 107315 (KIMURA K.K.)
- PATENT ABSTRACTS OF JAPAN vol. 11, no. 199 (M-602)(2646) 26 June 1987,& JP-A-62 23722 (SUMITOMO HEAVY IND. LTD.)

## Description

This invention relates to apparatus and method for the simultaneous control of two or more related variables such as, for example, the velocity and pressure of a hydraulic cylinder which is used in a control system. Such a control system is disclosed for example in US Patent 4 325 896.

According to a first aspect of the present invention there is provided a method of controlling a system having a first set of at least two interrelated variables, having a first uncontrollable relationship resulting from system characteristics, a second set of variables of which at least two are related to variables of said first set, with the second set of variables having a second controllable relationship, the method comprising the steps of storing the second relationship, monitoring the states of said first and second sets of variables, comparing said monitored second set of variables with said second relationship, and adjusting one or more characteristics of the system in order to urge the system into a state which conforms to the second relationship.

According to a further aspect of the present invention, there is provided a controller for a system having a first set of at least two variables, the variables being interrelated and having a first uncontrollable relationship resulting from system characteristics, and a second set of variables at least two of which are related to variables of said first set, with the second set of variables having a second controllable relationship, the controller comprising means for storing, or having access to, a multiplicity of desirable states of the system in accordance with the second relationship, means for monitoring the states of said first and second sets of variables, means for comparing said monitored second set of variables with said second relationship, and means for adjusting one or more characteristics of the system in order to urge the system into a state which conforms to the second relationship.

The means for storing the second relationship may be such as to store that relationship in the form of an equation, look-up tables, map, surface, curve or line, the second relationship being stored using nominal or typical values of the variables, or as a percentage of maximum allowable values. The means for adjusting one or more of the variables may be responsive to the states of other system variables or to external signals, whether user generated or from another system controller. The level of each monitored variable and/or second relationship may be scaled prior to, or after, the comparison between the monitored variables and the second relationship, the magnitude of the scalings being controlled by the level of the external signal(s) or the level(s) of one or more other system variables, the rescaling being achieved in linear or non-linear form, including the adding of constant or variable offsets, or the substitution of an alternative second relationship.

One or more of the variables may not be directly monitored due to physical, practical or cost constraints, or because, for example, the variable is a performance index which cannot be obtained by a single measurement of the system. In this event, the variable required for comparison with the second relationship may be calculated or estimated from other system variables which can be monitored.

The principle feature of the present invention is that of allowing any level or magnitude for any of the variables, provided that the combination of levels, hereinafter also referred to as "the state" of the system, conforms to the stored second relationship. The control action taken in each case is the result of a comparison between the state of the system and the second relation-ship and the calculation of the direction and magnitude of control action necessary to urge the system towards any state which conforms to the second relationship.

The system to be controlled will normally have fewer control means for urging the system towards the desired state, defined by the second relationship, than there are variables included in the second relationship, inferring that the second relationship must consist of at least two interrelated variables, but may in fact include any number of interrelated or independent variables used better to describe the desired states of the system. The system must include at least one system control means which modifies the operating level of at least two of the interrelated variables.

The present invention can be used to improve the performance of a system or machine in a variety of ways including, for example, limiting power requirements, or power losses, controlling stress, strain, heat generation, flows, or maximising efficiency. Alternatively, the second relationship may be defined entirely or partially on an empirical basis to suit the process or actions being controlled. It will be appreciated that such control will normally be of advantage when improvements, such as those recited above, are not best achieved by a simpler controller which will only control the level of one variable at a time. While such a simple controller may be able to switch to an alternative control mode to control another variable, it cannot prevent undesirable combinations of said variables. A controller in accordance with the present invention can by use of a suitable second relationship prevent such undesirable system states and in addition can further improve the dynamic behaviour of the system by changing or adjusting the second relationship in response to various measurement, including the rate of change of one or more of the variables. A controller in accordance with the present invention can be used in combination with dynamic compensation means to improve system stability or dynamic response and also in combination with means to linearise or modify any variable or the input/output characteristics of the system.

The present invention may find application in a number of different systems but one application is that of a fluid power system to control, for example, pressure and flow at some point in the system. Simultaneous control of these two variables, or any other two or more variables, may be advantageous for a multiplicity of reasons, for example improving the quality of a part or component produced by injection moulding or forging, or the controller may be used to limit power or load requirements on a prime mover or other component in the system.

Apparatus and method for the simultaneous control of two or more related variables in accordance with the present invention will now be described in greater detail, by way of example, with reference to the accompanying drawings, in which:-
Figures 1 to 3 are plots useful in explaining the invention,
Figure 4 is a general schematic layout of one embodiment of the invention, and
Figure 5 is a more detailed block diagram of a specific embodiment of the invention.

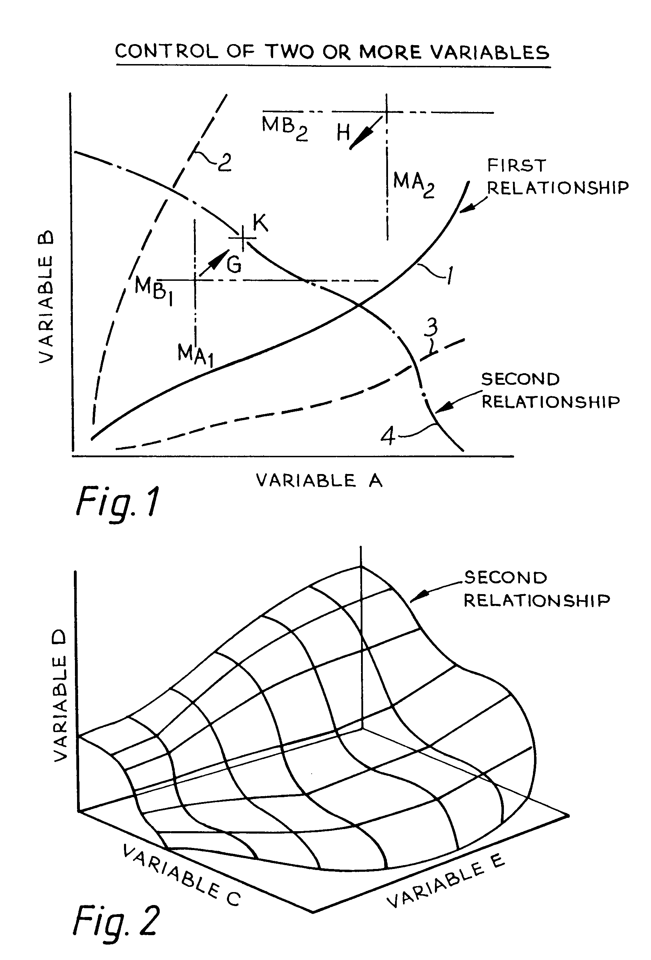

Figure 1 is a plot of variable A against variable B and the full line 1 illustrates a first relationship between these two variables. This first relationship results from characteristics of the plant or system being controlled and the relationship is not controllable or alterable by the plant or system control means. In addition, the first relationship may change due to variations in other characteristics of the plant or system, for example, to that indicated by the broken lines 2 and 3. The second relationship is illustrated by the chain line 4 and for the purposes of illustration, the first and second relationships illustrated are arbitrary and may be of alternative forms. In addition, the variables A and B need not be direct measurements from a system being controlled but may be scaled, adjusted or calculated from one or more of a multiplicity of inputs. The system or plant to be controlled is such that adjustments to the system or plant control means will cause both variables A and B to change in proportion to each other as shown by the first relationship.

Still referring to Figure 1 of the drawings, the operation of the controller in accordance with the present invention is such that after a measurement of the system or plant is made at Time 1 and the point of intersection of the variables A and B found, the controller will adjust the signal to the system or plant control means and the magnitude and direction of this adjustment will be such as to urge the point of intersection of the two variables shown as MA₁ and MB₁, approximately in the direction shown by the arrow G towards the line describing the second relationship without selecting any target point but rather accepting any point at which the variables A and B coincide with the second relationship as an acceptable operating point on the system shown in Figure 1 as point K. In some applications, it may not be possible for whatever reason to achieve an operating point exactly on the line 4 described in the second relationship, it being sufficient that the action of the controller urges the point of intersection of the two variables A and B towards the second relationship.

Similarly, if at another Time 2, the point of intersection of the two variables A and B is above the line 4 described in the second relationship as illustrated in Figure 1, the controller will adjust the signal to the system or plant control means such as to move the point of intersection shown as MA₂ and MB₂ approximately in the direction shown by the arrow H. The actual direction of movement of the point of intersection is dependent upon the transient and steady state of behaviour of the system or plant and can deviate from the path described by the first relationship 1 under transient conditions. The transient behaviour of the plant or system may dictate that additional compensation means are used to achieve stable operation. This compensation may be applied in a variety of different ways, including time-dependent filters applied to system measurements, or the system or plant control signal or adjustments to the second relationship based on the transient behaviour of the system or plant.

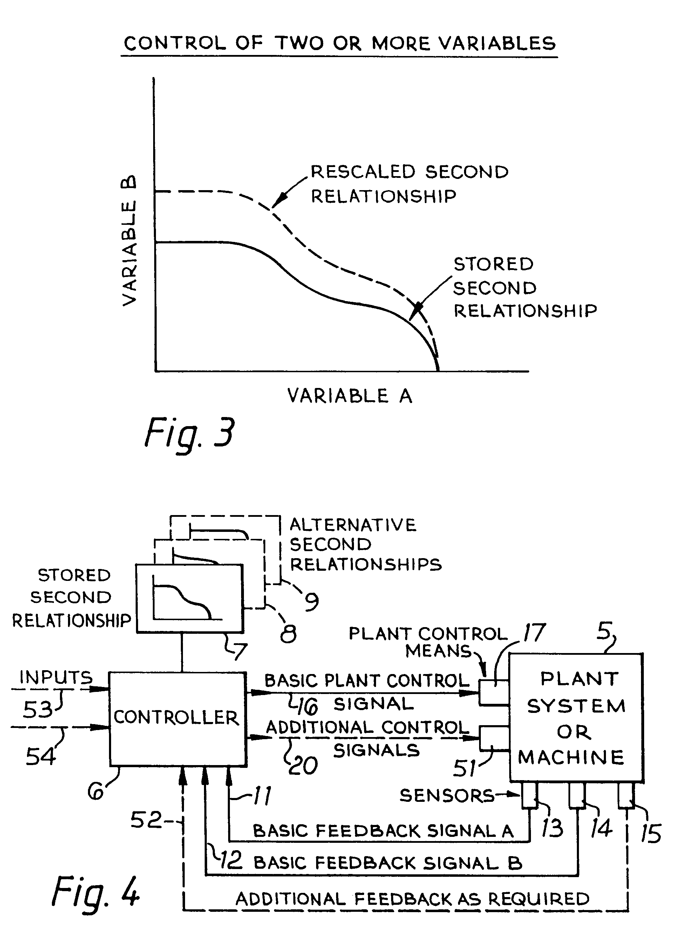

Turning now to Figures 2 and 3, these illustrate modifications to the relationship of two variables D and C by way of a third variable E which may be an input signal, a plant or system variable or a combination of these. Modification may be achieved in proportion to the third variable E in one direction as shown in Figure 3, or the magnitude of the third variable may cause a change in the form of the second relationship as shown in Figure 3. Alternatively, step changes to the second relationship may be employed. These and any other means of adjustment may be used in isolation or in combination in response to any additional variable or variables or the rate of change of any of the original variables or the application or magnitude of external signals.

Turning now to Figure 4, this illustrates a general control arrangement in accordance with the present invention. A plant, system or machine (hereinafter referred to as "the plant" for convenience), for example, indicated at 5 is connected to a controller 6 which has access to the controllable second relationship indicated at 7, with alternative second relationships being indicated at 8 and 9. At least measurements of two variables of the state of the plant, are taken using sensors 13 and 14 and applied via lines 11 and 12 to the controller 6 at least two of the measured variables being interdependent, the controller then using these two interdependent measurements to generate at least two key variables which are compared with the second relationship 7 to generate at least one plant, control signal to adjust the state of the plant. The plant 5 may be fitted with additional sensors, such as indicated at 15, to produce one or more feedback signals to the controller 6 via line 52 and which may be used, as can the optional inputs 53 and 54, to adjust the second relationship, scale or modify the key variables A and B, or modify plant control signals in any desired manner. Alternatively, any further input and/or feedback signal may be used to generate other key variables for comparison with a second relationship describing the relationship between more than two key variables. The basic plant control signal generated by the controller 6 is applied on a line 16 to control means 17 and other outputs may be provided on line 20.

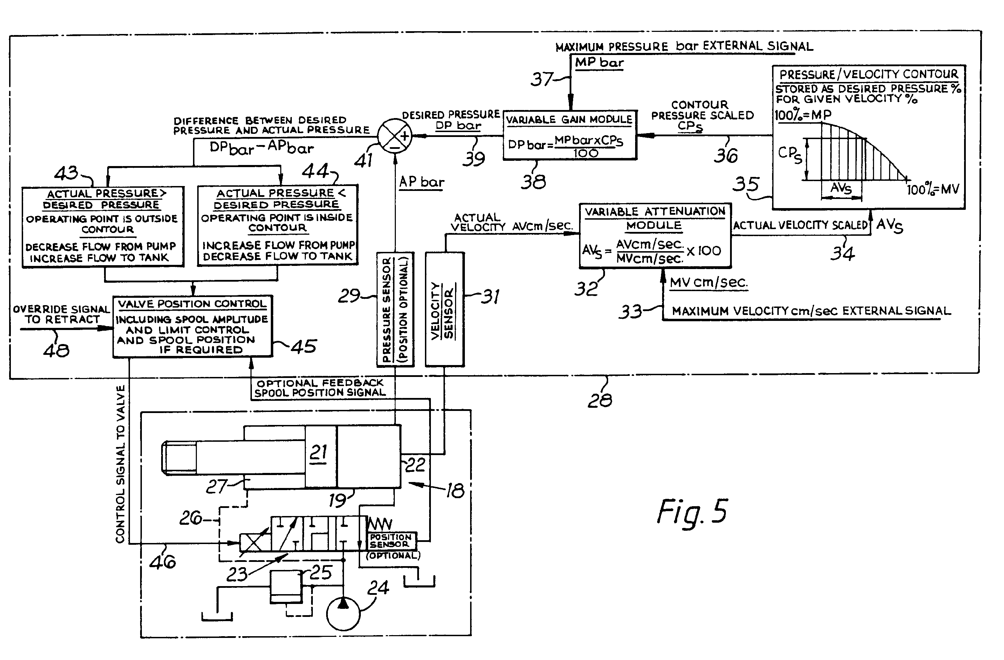

Figure 5 of the drawings shows in greater detail an embodiment of the present invention which comprises as the plant, system or machine to be controlled an hydraulic actuator 18 comprising a cylinder 19 and piston 21 in conventional manner. Such an actuator can be part of an injection moulding machine, for example, and used to inject synthetic plastic material into a mould, the parameters of this injection being critical to the quality of article produced. In this embodiment, the two variables of the first set of variables are the velocity of the actuator 18 and the pressure in the cylinder swept volume 22. The flow of hydraulic fluid to the actuator 18 is controlled by a proportional control valve 23 which is in turn supplied with pressure fluid from a pump 24 fitted with a pressure relief valve 25. As indicated by broken line 26, the hydraulic circuit may be arranged so as to supply pressure fluid to the annular swept volume 27 of the cylinder 19 to assist with the retraction of the piston 21 when required.

The controller in accordance with the present invention is indicated generally at 28 and comprises a pressure sensor 29 connected to the cylinder 22 of the actuator 18 and a velocity sensor 31 connected directly or indirectly to the piston 21 of the actuator. The velocity sensor 31 generates a signal which is proportional to the actual velocity of the actuator 18 and this signal is applied to a variable attenuation module 32 in which the actual velocity signal is divided by a maximum velocity signal supplied on line 33, the output of the attenuation module being a scaled actual velocity signal which describes actual velocity as a percentage of maximum velocity and this is one variable of the second set of variables the other of which is pressure. Thus, the two variables of the second set are related to the first set. The maximum velocity signal supplied on the line 33 may be fixed or variable and may be generated empirically and/or be in part be dependent on other system variables such as the position of the actuator 18, the temperature of the system or material being processed, or by direct user input. The scaled velocity signal is applied on a line 34 to means 35 storing the desired relationship between the velocity and pressure of the actuator 18, this relationship being by way of a contour equation or look-up table. This stored data in the means 35 may be scaled if desired, to allow a variety of maximum pressures or maximum velocities defined by external signals applied to the controller.

The scaled actual velocity signal on line 34 is used to access the data in the means 35 to provide a scaled desired pressure signal on output line 36 derived from the pressure/velocity contour, equation or look-up table stored therein. The scaled contour pressure signal on line 36 expresses pressure as a percentage of the maximum pressure signal which is applied on line 37, these two signals being multiplied together in a variable gain module 38 to provide an output signal on line 39 which is proportional to the desired pressure. The desired pressure signal on line 39 is compared in a comparator 41 with the actual pressure signal on line 42 provided by the pressure sensor 29. The difference between these two signals is applied to two control means 43 and 44. If the pressure difference signal has a negative value, this indicates that the actual pressure is too great and the control means 43 will generate a signal and apply it to a valve position control circuit 45 indicating that flow from the pump 24 to the actuator 18 should be reduced and/or the flow to tank from the swept volume 22 of the actuator should be increased. Alternatively, a positive value of the difference pressure signal indicates that the actual pressure is less than the desired pressure and a signal will be generated from the control means 44 and applied to the value position control means 45 indicating that the flow from the pump 24 to the swept volume 22 of the actuator 18 should be increased and/or the flow from the swept volume 22 to tank should be decreased. The valve position control means 45 applies a control signal to the control valve 23 on line 46 and thus controls the direction and magnitude of movement of the control valve spool in response to signals from the control means 43 and 44 and limits full movement when required. This control of the valve 23 may operate in a closed loop feedback mode using signals from a position sensor 47 which are applied to the valve position control means 45. It should be noted that this alternative mode of operation is optional.

Any of the modules of the controller 28 may be arranged to respond to external override signals, in particular the valve position control module 45 which may be arranged to respond to an override signal on line 48 to retract the actuator 18, when required. Alternatively, retraction of the actuator 18 may be achieved in the illustrated embodiment by reducing the maximum pressure external signal on line 37 to produce a negative difference signal from the comparator 41, thus causing the control means 43 to command an increase in flow (to tank) from the swept volume 22 of the actuator 18, allowing the pressure in the swept volume 27 to retract the actuator.

In the embodiment of Figure 5, the pressure/velocity contour stored in means 35 may be defined by storing the desired pressure at discreet intervals equivalent to 10% of the maximum velocity. Mathematical straight line interpolation would be used to calculate the desired pressure at any point between the 10% intervals. Thus it will be seen in the embodiment of Figure 5 that the two variables are pressure and velocity and a controllable relationship between these two variables is stored in the means 35. The states of these two variables are monitored by the sensors 29 and 31 and the monitored states are compared with the relationship established in 35 and the result of this comparison used to adjust, if necessary, one of the variables.

It will be seen that the second relationship describes the desired states of the system using one or more unmeasured, imaginary or non-real variables, including performance index numbers, calculated or generated from measured variables and known or estimated data, and the comparison between these calculated or generated variables and the second relationship is used to determine the control action to the system via the controller. At least two of this second set of variables are related to variables of the first set of variables.

The system may be such as to control any function, including valves, switches, solenoids, motors, actuators, and pumps, or to control the level, position, speed, force, strength or other motion of any component, product, fluid, field, current or voltage. The invention can be used to control any system, plant, machine or process in which the quality, cost, performance, production rate or any other parameter of the article, product or component being manufactured can be improved or better controlled by the use of suitable second relationship discussed above. The invention may be used to limit the power, torque or speed requirements placed on a prime mover, or used to limit the power generated by, or lost, in the system or any part thereof. The at least two variables may be those describing the motion and/or force, pressure, torque or power generated or required by any unit, vehicle, vessel, actuator, motor or solenoid.

As already mentioned, the invention may find particular application in an injection moulding process to control, for example, the relationship between speed and force or pressure of any actuator used to manipulate or inject any material into a mould or through any die, restriction or pipe so as to allow both speed and force or pressure, or any other two or more system variables, to be continuously variable in response to changing resistance of the material being manipulated and also to impose a desired relationship between speed and force or pressure, or any other two or more system variables, as described by the second relationship.

## Claims

1. A method of controlling an hydraulic actuator (18) having a first set of two interrelated variables (A,B), namely velocity and pressure, having a first uncontrollable relationship resulting from system characteristics, the actuator being controlled by a control valve (23) connected to a substantially constant pressure source (24,25) of hydraulic fluid so that if the load on the actuator changes, the interrelationship between the velocity and pressure changes dependent upon the characteristics of the control valve,
characterised in that:
the actuator also has a second set of variables of which at least two are related to variables of said first set, with the second set of variables having a second desired relationship,
and in that:
the method comprises the steps of storing (7,8,9) the second relationship, monitoring (13,14,15) the state of the first set of variables, generating a second set of variables from the first set of variables, comparing (5) said generated second set of variables with said desired relationship, and adjusting (5) the input to the control valve (23) to urge the system towards a state which conforms to the desired relationship.

2. A system comprising an hydraulic actuator (18) having a first set of at least two variables (A,B), namely velocity and pressure, the variables being interrelated and having a first uncontrollable relationship, resulting from system characteristics, the system further comprising a controller for the hydraulic actuator (23), the controller comprising a control valve (23) connected to a substantially constant source (24,25) of hydraulic fluid so that if the load on the actuator changes, the interrelationship between the velocity and pressure changes dependent upon the characteristics of the control valve,
characterised in that:
the actuator (18) also has a second set of variables at least two of which are related to variables of the first set, with the second set of variables having a second desired relationship,
and in that:
the controller further comprises means (7,8,9) for storing, or having access to, a multiplicity of desirable states of the system in accordance with the second desired relationship, means (13,14,15) for monitoring the state of said first set of variables, means for generating a second set of variables from the first set of variables, means (5) for comparing said generated second set of variables with said second relationship, and means (17,51) for adjusting the input to the control valve to urge the system towards a state which conforms to the desired relationship.

3. A system according to claim 2, characterised in that the means (7,8,9) for storing the second relationship stores that relationship in the form of an equation, look-up tables, map, surface, curve or line.

4. A system according to claim 3, characterised in that the second relationship is stored using scaled variables which are a percentage or ratio of maximum allowable values, the allowable maximum values being preset or adjustable in response to the states of other system variables or to external signals.

5. A system according to any of claims 2 to 5, characterised in that the level of each monitored variable and/or second relationship is scaled prior to, or after, the comparison between the monitored variables and the second relationship, the magnitude of the scaling being controlled by the level of an external signal or signals, or the level or levels of one or more other system variables.

6. A system according to claim 4 or 5, characterised in that the scaling or adjustment is achieved in linear or non-linear form, including the adding of constant or variable offsets.

7. A system according to any of claims 2 to 6, characterised in that an alternative second relationship is substituted either progressively or in a single step to allow for different system conditions, performance requirements or to reduce the calculation time required to scale variables or to scale the second relationship.

8. A system according to any of claims 2 to 7, characterised in that one or more of the variables is monitored indirectly.

## Patentansprüche

1. Ein Verfahren zum Regeln einer hydraulischen Betätigungsvorrichtung (18) mit einem ersten Satz von zwei zusammenhängenden Variablen (A, B), nämlich Geschwindigkeit und Druck, welche eine erste nichtregelbare Beziehung aufweisen, die sich aus System-Charakteristiken ergibt, wobei die Betätigungsvorrichtung durch ein Regelungsventil (23) geregelt wird, das mit einer Quelle (24, 25) für im wesentlichen konstanten Druck eines Hydraulikfluids verbunden ist, so daß, falls sich die Last an der Betätigungsvorrichtung ändert, sich die Wechselbeziehung bzw. der Zusammenhang zwischen der Geschwindigkeit und dem Druck abhängig von den Charakteristiken des Regelungsventils ändert,
dadurch gekennzeichnet, daß:
die Betätigungsvorrichtung ebenfalls einen zweiten Satz von Variablen aufweist, von welchen mindestens zwei mit Variablen des ersten Satzes zusammenhängen, wobei der zweite Satz von Variablen eine zweite gewünschte Beziehung aufweist, und dadurch, daß:
das Verfahren die Schritte umfaßt, daß die zweite Beziehung gespeichert wird (7, 8, 9), der Zustand des ersten Satzes von Variablen überwacht wird (13, 14, 15), ein zweiter Satz von Variablen aus dem ersten Satz von Variablen erzeugt wird, der erzeugte zweite Satz von Variablen mit der gewünschten Beziehung verglichen wird (5) und die Eingabe in das Regelungsventil (23) eingestellt wird (5), um das System auf einen Zustand hin zu drängen bzw. zu zwingen, welcher der gewünschten Beziehung entspricht.

2. Ein System, das eine hydraulische Betätigungsvorrichtung (18) mit einem ersten Satz von mindestens zwei Variablen (A, B), nämlich Geschwindigkeit und Druck, enthält, wobei die Variablen zusammenhängen und eine erste nichtregelbare Beziehung aufweisen, welche sich aus System-Charakteristiken ergibt, wobei das System ferner einen Regler (23) für die hydraulische Betätigungsvorrichtung umfaßt, wobei der Regler ein Regelungsventil (23) enthält, das mit einer Quelle (24, 25) für einen im wesentlichen konstanten Druck eines Hydraulikfluids verbunden ist, so daß, falls sich die Last an der Betätigungsvorrichtung ändert, sich der Zusammenhang zwischen der Geschwindigkeit und dem Druck abhängig von den Charakteristiken des Regelungsventils ändert,
dadurch gekennzeichnet, daß:
die Betätigungsvorrichtung (18) ebenfalls einen zweiten Satz von Variablen aufweist, von welchen mindestens zwei mit Variablen des ersten Satzes zusammenhängen, wobei der zweite Satz von Variablen eine zweite gewünschte Beziehung aufweist,
und dadurch, daß:
der Regler ferner Mittel (7, 8, 9) umfaßt, um eine Vielzahl wünschenswerter Zustände des Systems gemäß der zweiten gewünschten Beziehung zu speichern oder darauf einen Zugriff zu haben, Mittel (13, 14, 15), um den Zustand des ersten Satzes von Variablen zu überwachen, Mittel, um einen zweiten Satz von Variablen aus dem ersten Satz von Variablen zu erzeugen, Mittel (5), um den erzeugten zweiten Satz von Variablen mit der zweiten Beziehung zu vergleichen, und Mittel (17, 51), um die Eingabe in das Regelungsventil einzustellen, um das System auf einen Zustand hin zu drängen bzw. zu zwingen, welcher der gewünschten Beziehung entspricht.

3. Ein System nach Anspruch 2, dadurch gekennzeichnet, daß das Mittel (7, 8, 9) zum Speichern der zweiten Beziehung diese Beziehung in der Form einer Gleichung, von Ablesetabellen, einer Abbildung, einer Oberfläche, Kurve oder Linie speichert.

4. Ein System nach Anspruch 3, dadurch gekennzeichnet, daß die zweite Beziehung unter Verwendung skalierter Variablen gespeichert wird, welche ein Prozentsatz oder Verhältnis maximaler zulässiger Werte sind, wobei die zulässigen maximalen Werte als Antwort auf die Zustände anderer Systemvariablen oder auf externe Signale voreingestellt werden oder einstellbar sind.

5. Ein System nach irgendeinem der Ansprüche 2 bis 4, dadurch gekennzeichnet, daß der Pegel jeder überwachten Variable und/oder die zweite Beziehung vor oder nach dem Vergleich zwischen den überwachten Variablen und der zweiten Beziehung skaliert werden/wird, wobei die Größe der Skalierung durch den Pegel eines externen Signals oder externer Signale oder den Pegel oder die Pegel von einer oder mehreren anderen Systemvariablen geregelt wird.

6. Ein System nach Anspruch 4 oder 5, dadurch gekennzeichnet, daß die Skalierung oder Einstellung in linearer oder nichtlinearer Form, einschließlich der Addition konstanter oder variabler Versetzungen, erreicht wird.

7. Ein System nach irgendeinem der Ansprüche 2 bis 6, dadurch gekennzeichnet, daß eine alternative zweite Beziehung entweder progressiv bzw. allmählich oder in einem einzigen Schritt substituiert wird, um verschiedene Systembedingungen, Ausführungsanforderungen zu berücksichtigen oder um die Berechnungszeit zu reduzieren, die erforderlich ist, um Variablen zu skalieren, oder um die zweite Beziehung zu skalieren.

8. Ein System nach irgendeinem der Ansprüche 2 bis 7, dadurch gekennzeichnet, daß eine oder mehrere der Variablen indirekt überwacht werden.

## Revendications

1. Procédé de commande d'un actionneur hydraulique (18) ayant un premier ensemble de deux variables corrélées (A,B), à savoir vitesse et pression, ayant une première relation incontrôlable résultant des caractéristiques du système, l'actionneur étant commandé par une vanne de commande (23) reliée à une source de pression sensiblement constante (24,25) de fluide hydraulique, de sorte que si la charge sur l'actionneur change, l'interrelation entre la vitesse et la pression change en fonction des caractéristiques de la vanne de commande,
caractérisé en ce que:
l'actionneur comporte également un deuxième ensemble de variables dont au moins deux sont reliées à des variables dudit premier ensemble, le deuxième ensemble de variables ayant une deuxième relation souhaitée,
et en ce que:
le procédé comprend les étapes de stockage (7,8,9) de la deuxième relation, de contrôle (13,14,15) de l'état du premier ensemble de variables, de génération d'un deuxième ensemble de variables à partir du premier ensemble de variables, de comparaison (5) dudit deuxième ensemble généré de variables avec ladite relation souhaitée et de réglage (5) de l'entrée à la vanne de commande (23) pour forcer le système vers un état qui se conforme à la relation souhaitée.

2. Système comprenant un actionneur hydraulique (18) ayant un premier ensemble d'au moins deux variables (A,B), à savoir vitesse et pression, les variables étant corrélées et ayant une première relation incontrôlable, résultant des caractéristiques du système, le système comprenant en outre un contrôleur pour l'actionneur hydraulique (23), le contrôleur comprenant une vanne de commande (23) reliée à une source sensiblement constante (24,25) de fluide hydraulique, de sorte que si la charge sur l'actionneur change, l'interrelation entre la vitesse et la pression change, en fonction des caractéristiques de la vanne de commande,
caractérisé en ce que:
l'actionneur (18) comporte également un deuxième ensemble de variables dont au moins deux sont reliées à des variables dudit premier ensemble, le deuxième ensemble de variables ayant une deuxième relation souhaitée,
et en ce que:
le contrôleur comprend de plus des moyens (7,8,9) de stockage, ou d'accès, de/à une multiplicité d'états souhaitables du système suivant la deuxième relation souhaitée, des moyens (13,14,15) de contrôle de l'état dudit premier ensemble de variables, un moyen de génération d'un deuxième ensemble de variables à partir du premier ensemble de variables, un moyen (5) de comparaison dudit deuxième ensemble généré de variables avec ladite deuxième relation, et des moyens (17,51) de réglage de l'entrée à la vanne de commande pour forcer le système vers un état qui se conforme à la relation souhaitée.

3. Système selon la revendication 2, caractérisé en ce que les moyens (7,8,9) de stockage de la deuxième relation mémorisent cette relation sous la forme d'une équation, de tables de consultation, d'une carte, d'une surface, d'une courbe, ou d'une ligne.

4. Système selon la revendication 3, caractérisé en ce que la deuxième relation est stockée en utilisant des variables mises à l'échelle qui représentent un pourcentage ou un rapport de valeurs maximales admissibles, les valeurs maximales admissibles étant préétablies ou réglables en réponse aux états d'autres variables du système ou à des signaux extérieurs.

5. Système selon l'une quelconque des revendications 2 à 5, caractérisé en ce que le niveau de chaque variable contrôlée et/ou deuxième relation est mis à l'échelle avant, ou après, la comparaison entre les variables contrôlées et la deuxième relation, l'importance de la mise à l'échelle étant contrôlée par le niveau d'un signal ou de signaux extérieurs, ou par le niveau ou des niveaux d'une ou de plusieurs autres variables du système.

6. Système selon la revendication 4 ou 5, caractérisé en ce que la mise à l'échelle ou le réglage est réalisé(e) sous forme linéaire ou non linéaire, ajout de décalages de constantes ou de variables compris.

7. Système selon l'une quelconque des revendications 2 à 6, caractérisé en ce qu'une autre deuxième relation est substituée soit progressivement soit par pas séparés pour permettre différentes conditions du système, exigences de performances, ou pour réduire le temps de calcul requis pour mettre à l'échelle des variables ou mettre à l'échelle la deuxième relation.

8. Système selon l'une quelconque des revendications 2 à 7, caractérisé en ce qu'une ou plusieurs des variables est ou sont contrôlée(s) indirectement.
